# EUROPÄISCHE PATENTSCHRIFT

(11) **EP 0 684 681 B1**
(45) Veröffentlichungstag und Bekanntmachung des Hinweises auf die Patenterteilung: **29.07.1998**
(21) Anmeldenummer: 95107785.8
(22) Anmeldetag: 22.05.1995
(51) Int. Cl.: H02J 13/00

(54) **Netzankopplung für Einrichtungen zur Datenübertragung über ein elektrisches Verteilnetz**
Device for coupling with the electricity distribution network of apparatuses for data transmission
Dispositif pour le couplage avec le réseau de distribution électrique des appareils de transmission de données

(30) Priorität: 26.05.1994 DE 4418296
(43) Veröffentlichungstag der Anmeldung: 29.11.1995
(73) Patentinhaber: ABB PATENT GmbH, 68309 Mannheim (DE)
(72) Erfinder: Heite, Christian, Dr., D-58579 Schalksmühle (DE)
(74) Vertreter: Rupprecht, Klaus, Dipl.-Ing.

(56) Entgegenhaltungen:
- FR-A- 1 265 672
- FR-A- 2 075 588
- FR-A- 2 580 446
- US-A- 4 768 205

## Beschreibung

Die Erfindung bezieht sich auf eine Netzankoppeleinrichtung für Systeme zur Datenübertragung über ein elektrisches Verteilnetz.

Aus der Druckschrift BJE 1008/3.92/0502 "Netzbus X10, Technisches Handbuch" der Firma Busch-Jaeger Elektro GmbH, Lüdenscheid, ist das System Busch-Netzbus X-10 bekannt, zu dem eine Netzankoppeleinrichtung als Systemkomponente gehört.

Netzankoppelungen werden in derartigen Fernsteuersystemen sowohl für die Senderichtung als auch für die Empfangsrichtung eingesetzt. Sie können universell für beide Übertragungsrichtungen verwendbar sein, mit teils gemeinsamen und teils getrennten Signalpfaden je Übertragungsrichtung.

Die Erfindung bezieht sich auf eine Netzankoppeleinrichtung bzw. den Funktionsteil einer universellen Netzankopplung für die Empfangsrichtung.

Eine Datenübertragung - z.B. zum Fernsteuern - und Verwendung eines elektrischen Verteilnetzes als physikalisches Übertragungsmedium hat den Vorteil, daß an allen wesentlichen Punkten Zugang zum Netz besteht und somit keine zusätzlichen Leitungen verlegt werden müssen. Jedoch hat ein Elektro-Installationsnetz ungünstige HF-Übertragungseigenschaften; es ist nicht zum Zweck der Datenübertragung, sondern zum Zweck der Energieübertragung konzipiert. Die am Installationsnetz angeschlossenen Verbraucher und die Leitung selbst dämpfen HF-Signale. Außerdem ist das Netz durch hohe Störleistungsdichten gekennzeichnet.

Normen oder Richtlinien schreiben einen zugelassenen Frequenzbereich und eine maximale Sendeleistung vor; die europäische Norm EN 50065-1 z. B. einen Frequenzbereich von 95 kHz bis 148.5 kHz mit verschiedenen Unterbändern und einem maximalen Sendepegel von 116 dB (µV) für allgemeinen Gebrauch bezogen auf eine Netznachbildung von 50 Ω ∥ (50 µH + 5 Ω).

Den marktgängigen schmalbandigen Übertragungssystemen - das gilt auch für das System Netzbus X-10 - sind aufgrund dieser Gegebenheiten Grenzen bezüglich der Übertragungsrate gesetzt. Um diese Grenzen überwinden zu können, sind eine Reihe von Vorschlägen zur Datenübertragung unter Anwendung der Bandspreiztechnik und Verwendung von Korrelationsverfahren und Optimalfiltern bekannt geworden.

Die Eigenschaften eines Systems zur Datenübertragung über ein Installationsnetz sind jedoch nicht nur von der Art der Modulation und Demodulation abhängig, sondern ganz wesentlich auch von der Art der Signalaufbereitung in einer Netzankoppeleinrichtung.

Mit einer empfangsseitigen Netzankoppeleinrichtung werden HF-Signale aus dem z.B. 50 Hz-Netz ausgekoppelt, gefiltert und verstärkt, um ein Empfangssignal für eine anschließende Signalwandlung und Signalauswertung aufzubereiten. Bekannte Netzankopplungen arbeiten zwar mit mehr oder weniger aufwendigen Hochpaß- oder Bandpaßfiltern, der große Dynamikbereich des HF-Signals, der bis etwa 60 dB betragen kann, wird jedoch nicht ausreichend berücksichtigt. Alle bekannten Ankoppelschaltungen benutzen eine oder mehrere feste Verstärkerstufen zur Anhebung schwacher Signale. Dadurch werden bei kleinen Signalamplituden die Filterstufen unzureichend ausgesteuert. Bei größeren Nutzsignalen treten Übersteuerungen auf, wodurch die charakteristische Signalform verfälscht wird. Dies führt bei korrelativem Optimalfilterempfang zu einer Degradation des Systems, weil der Informationsgehalt des Signals auf die Nulldurchgänge reduziert wird.

Als weiterer Nachteil können durch Komponenten mit nichtlinearen Übersteuerungskennlinien Außerband-Störspektren in das Nutzsignalband hineingemischt werden. Bei rechteckförmiger Verstärkerbegrenzung wird bevorzugt ein Frequenzbereich, der ein Drittel des Nutzfrequenzbereichs beträgt, in das Signalband hineingemischt. Für europäische Verhältnisse werden damit Störspektren im Frequenzbereich 30 kHz bis 50 kHz, in dem z.B. viele Schaltnetzteile oder elektronische Vorschaltgeräte für Leuchtstofflampen arbeiten, in das für Datenübertragungssysteme vorgesehene 95 kHz- bis 148.5 kHz-Band gemischt.

Die FR-A-1.265.672 offenbart eine Einrichtung entsprechend dem Ober begriff von Anspruch 1 und 2. Sie weist Mittel auf zur Ein- und Auskopplung von HF-Signalen in ein Hochspannungsnetz. Empfangsseitig erfolgt eine zweifache Umsetzung von einer Hochfrequenz über eine Zwischenfrequenz in eine Niederfrequenz. In diesem Signalweg ist eine Folge von Filtern, Verstärkern, Umsetzern und einem Begrenzer angeordnet. Vor der ersten Frequenzumsetzung ist ein Regelverstärker angeordnet, der in Abhängigkeit von einem ausgangsseitigen Signal geregelt wird.

In US-A-4,768,205 ist ein adaptiver Leitungsequalizer in einer Schalter-Kondensator-Technik (SCF) beschrieben, in dem eine spezielle Frequenzcharakteristik (Wurzel f) in Verbindung mit einer frequenzunabhängigen Verstärkungsregelung implementiert ist. Es soll damit eine adaptive Leitungsentzerrung erzielt werden.

Der Erfindung liegt die Aufgabe zugrunde, eine Netzankoppeleinrichtung anzugeben, die ein zur anschließenden Signalwandlung und/oder Signalauswertung gut geeignetes Empfangssignal liefert. Die Signalform des Sendesignals, z.B. ein Sinussignal, soll möglichst unverfälscht zurückgewonnen werden.

Diese Aufgabe wird durch eine Netzankoppeleinrichtung mit den im Anspruch 1 angegebenen Merkmalen gelöst. Alternativ dazu wird die Aufgabe durch eine Netzankoppeleinrichtung mit den im Anspruch 2 angegebenen Merkmalen gelöst.

Vorteilhafte Ausgestaltungen sind in Unteransprüchen angegeben.

Mit der erfindungsgemäßen Anordnung läßt sich eine optimale Aussteuerung der einzelnen Filter/Verstärker-Stufen -Stufen und somit ein weitgehender Erhalt der ursprünglichen Signalform erreichen.

Mehrere Ausführungsvarianten und deren Vorteile ergeben sich aus der nachstehenden Beschreibung von Ausführungsbeispielen anhand der Zeichnungsfiguren.

Es zeigen:
- Fig. 1: Blockschema einer ersten Variante der Netzankoppeleinrichtung, die einen Regelkreis enthält,
- Fig. 2: Schaltbild eines Ausführungsbeispiels zur ersten Variante,
- Fig. 3: Blockschema einer zweiten Variante der Netzankoppeleinrichtung, die eine Regeleinrichtung mit Zustandsregler enthält,
- Fig. 4: Blockschema einer dritten Variante der Netzankoppeleinrichtung, die mehrere unterlagerte Regelkreise enthält.

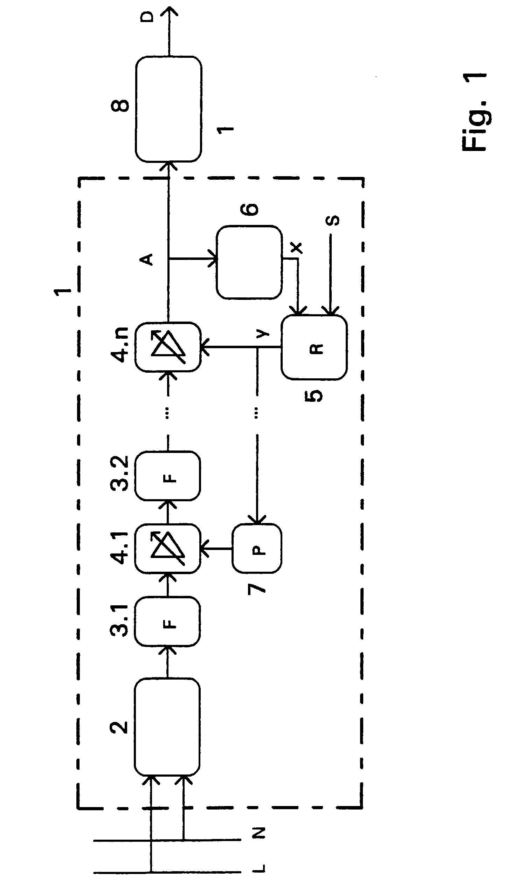

Fig. 1 zeigt ein Blockschema einer ersten Variante einer Netzankoppeleinrichtung 1. Diese enthält eine Abkoppeleinrichtung 2, deren Eingang mit dem Verteilnetz L, N verbunden ist. Der Ausgang der Abkoppeleinrichtung 2 ist mit dem ersten Filter 3.1 einer Kette von Filter/Verstärkerstufen 3.1/4.1 bis 3.n/4.n verbunden. Die Verstärker 4.1 bis 4.n sind einstellbar. Der letzte Verstärker 4.n in der Kette liefert ein Ausgangssignal A der Netzankoppeleinrichtung 1.

Einem Regler 5 ist außer einem Sollwert S eine Regelgröße x zugeführt. Die Regelgröße x wird in einem Hüllkurvendektor 6 gebildet, dessen Eingang mit dem Ausgang der Netzankoppeleinrichtung 1 verbunden ist. Die vom Regler 5 gebildete Stellgröße y ist dem - in der Kette - letzten Verstärker 4.n direkt und den anderen Verstärkern 4.1 bis 4.n-1 über je ein Proportionalglied 7 zugeführt.

Das Ausgangssignal A der Netzkoppeleinrichtung 1 ist zu einer A/D-Wandler- und Auswerte-Einrichtung 8 geführt, die Daten D ausgibt.

Mit der mehrstufigen Filterung und geregelten Verstärkung läßt sich das Eingangssignal optimal und weitgehend verzerrungsfrei aufbereiten für die anschließende Signalwandlung und Auswertung.

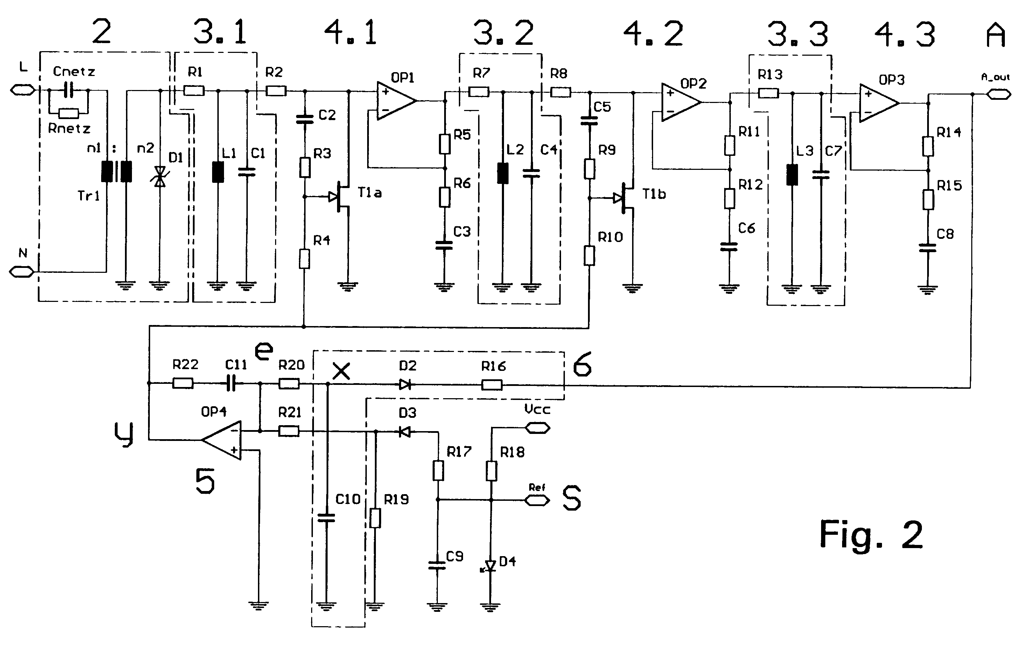

Einzelheiten eines möglichen Aufbaues einer solchen Netzankoppeleinrichtung und deren Arbeitsweise werden nachstehend anhand der in Fig. 2 dargestellten Netzankoppeleinrichtung erläutert. Funktionsgleiche Komponenten sind in allen Zeichnungsfiguren einheitlich bezeichnet.

Fig. 2 zeigt ein Ausführungsbeispiel zu der in Figur 1 dargestellten ersten Variante einer Netzankoppeleinrichtung, wobei - abweichend von der in Fig. 1 gezeigten Architektur - die letzte Verstärkerstufe nicht geregelt ist. Die letzte Verstärkerstufe ist dennoch in den Regelkreis einbezogen, weil die Regelgröße x durch einen Abgriff am Ausgang A gebildet ist.

Die Abkoppeleinrichtung 2, die mit Anschlüssen L, N an Phase und Null des elektrischen Stromnetzes angeschlossen ist, wird gebildet durch einen HF-Übertrager Trl in Verbindung mit einem Koppelkondensator Cnetz. Diese physikalische Netzanbindung bewirkt eine galvanische Trennung der Elektronikeinrichtung vom Stromnetz, Ausfilterung niederfrequenter Störsignale durch Hochpaßwirkung und Anpassung der Netzimpedanz an die Eingangsimpedanz der Elektronikeinrichtung. Der Entladewiderstand Rnetz dient zur Entladung des Koppelkondensators Cnetz, der mit der Primärwicklung des HF-Übertragers Trl in Reihe geschaltet ist. Parallel zur Sekundärwicklung des HF-Übertragers Trl ist eine Supressordiode D1 geschaltet, die netzseitige Hochspannungsspitzen unterdrückt.

Die eigentliche Regelstrecke wird durch die Verstärkerstufen 4.1 bis 4.3 mit den Operationsverstärkern OP1 bis OP3 gebildet. Diese Verstärkerstufen arbeiten als nichtinvertierende Wechselspannungsverstärker.

Die Signalfilterung erfolgt mit drei passiven Bandpaßfiltern 3.1 bis 3.3, die gebildet sind durch die Komponenten R1, L1 und C1 bzw. R7, L2 und C4 bzw. R13, L3 und C7. Passive Bandpässe sind gegenüber aktiven Filtern kostengünstiger realisierbar mit guter Reproduzierbarkeit in der Fertigung und weisen gute Signal-Störspannungsverhältnisse auf. Bei leichter Verstimmung der Mittenfrequenz der Bandpässe kann ein größerer "flacher" Bereich eingestellt werden.

Vor den Verstärkerstufen 4.1 und 4.2 mit den Operationsverstärkern OP1 und OP2 sind jeweils einstellbare Spannungsteiler eingefügt. Sie bestehen aus den Komponenten R2 und Tla bzw. R8 und Tlb. Als Stellelemente Tla, Tlb sind Junction-FET's eingesetzt, um möglichst wenig Rauschen zu erzeugen. Für einen guten Gleichlauf der einstellbaren Spannungsteiler ist die Verwendung von Doppel-Junction-FET's vorteilhaft.

Die Verstärkerstufen sind linearisiert, indem ein Teil des Drainpotentials über die Komponenten R3, C2 bzw. R9, C5 auf das Gate zurückgekoppelt wird.

Mit dieser zweistufigen Anordnung zur Verstärkungseinstellung läßt sich zum einen ein sehr großer Dynamikbereich von mehr als 60 dB abfangen, zum anderen kann durch die zweistufige Anordnung eine gleichmäßige Aussteuerung der einzelnen Verstärkerstufen gewährleistet werden.

Am Ausgang A liegt ein analoges geregeltes Ausgangssignal an, das direkt zur Steuerung eines A/D-Umsetzers verwendet werden kann.

Mit den Komponenten R16, D2 und C10 ist ein Hüllkurvendetektor 6 gebildet, mit dem der negative Spitzenwert des Ausgangssignals A gemessen wird. Dieser Spitzenwert wird als Regelgröße x verwendet.

Die Regelabweichung e für den Regler 5 wird gebildet durch Vergleich mit einem Referenzwert (Sollwert), der aus der Versorgungsspannung mit Hilfe der Komponenten R18 und D4 abgeleitet wird.

Im Ausführungsbeispiel wird der Referenzwert zur Maximalaussteuerung des A/D-Umsetzers in der Signalwandel- und Auswerteeinrichtung 8 herangezogen.

In der Netzankoppeleinrichtung 1 wird der Referenzwert mit der Diode D3 um eine Diodenflußspannung abgesenkt, um den durch die Diode D2 hervorgerufenen Meßfehler bei der Regelgröße x zu kompensieren. Der Widerstand R19 wird so gewählt, daß der Strom durch die Kompensationsdiode D3 dem Mittelwert des Stroms durch die Meßdiode D2 entspricht.

Ein Kondensator C9 ist zur Filterung der Referenzspannung angeordnet. Die Widerstände R16 und R17 bewirken eine Strombegrenzung.

Der Regler 5 mit dem Regelverstärker OP4 arbeitet als PI-Regler, dessen I-Anteil durch C11 und R22 bestimmt wird, bzw. dessen P-Anteil durch die Widerstände R20, R21, R22.

Das Ausgangssignal des Reglers 5 ist als Stellgröße y auf die Regelstrecke geschaltet, und zwar über Widerstände R4 bzw. R10, mit denen eine unterschiedliche Gewichtung der Stellgröße y auf Abschnitte der Regelstrecke eingestellt werden kann.

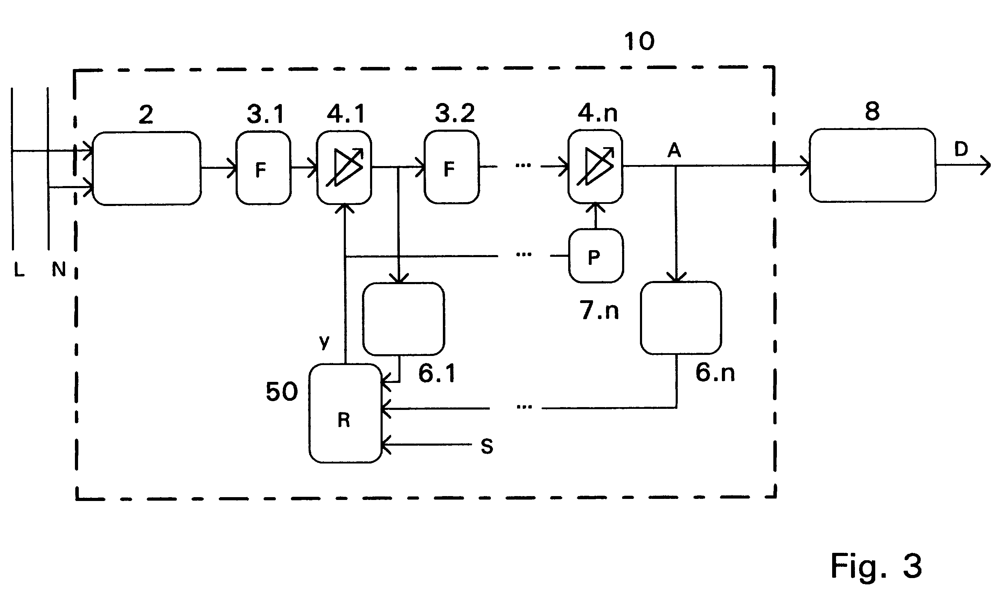

Fig. 3 zeigt eine zweite Variante mit einer Netzankoppeleinrichtung 10, die einen Zustandsregler 50 aufweist. Dem Zustandsregler sind die Ausgangssignale mehrerer oder aller Filterstufen 4.1 bis 4.n über Hüllkurvendetektoren 6.1 bis 6.n zugeführt. Das vom Regler gebildete Stellsignal y ist über Proportionalglieder 7.1 bis 7.n den Verstärkerstufen 4.1 bis 4.n aufgeschaltet.

Mit der zweiten Variante kann im Vergleich zur ersten Variante schneller auf auftretende Pegeländerungen reagiert werden. Bei der ersten Variante muß sich nämlich eine Störung bereits auf den Ausgang ausgewirkt haben, bevor der Regler eingreifen kann. Energiereiche Störpulse können dabei sehr leicht die Bandpaßfilter zu gedämpften Schwingungen anregen.

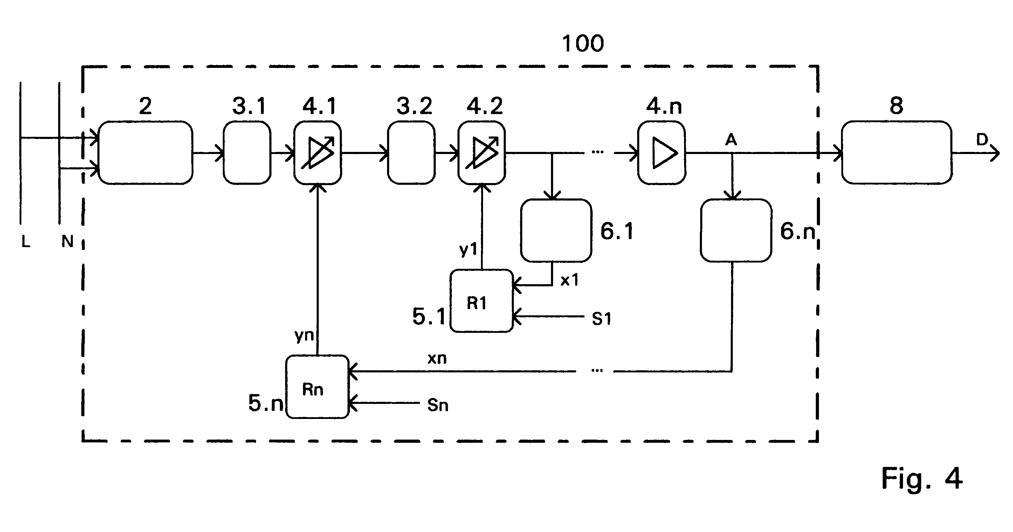

In ähnlicher Weise läßt sich mit der in Fig. 4 dargestellten dritten Variante eine schnellere Reaktion der Reglereinrichtung erreichen. Die Netzankoppeleinrichtung 100 der dritten Variante enthält mehrere unterlagerte Regelkreise mit Reglern 5.1 bis 5.n. Mit dem Regler 5.1 ist beispielsweise ein innerer Regelkreis gebildet, wobei dem Regler 5.1 das Ausgangssignal des Verstärkers 4.2 über einen Hüllkurvendetektor 6.1 als Regelgröße xl zugeführt ist und die vom Regler gebildete Stellgröße yl dem Verstärker 4.2 aufgeschaltet ist. Den inneren Regelkreisen ist ein äußerer Regelkreis mit dem Regler 5.n überlagert, dem das Ausgangssignal A der Netzkoppeleinrichtung 100 über den Hüllkurvendetektor 6.ln als Regelgröße x.n zugeführt ist und der die Stellgröße y.n für den ersten Verstärker 4.1 in der Kette bildet. Den Reglern 5.1 bis 5.n sind angepaßte Sollwerte S1 bis Sn vorgegeben.

Die in den Regelkreisen verwendeten Stellelemente müssen hohen Linearitätsansprüchen genügen und können als Präzisions-Analogmultiplizierer, als linearisierte Abschwächernetzwerke mit Feldeffekttransistoren oder als multiplizierende D/A-Umsetzer ausgeführt sein.

### Bezugszeichenliste

- 1, 10, 100: Netzankoppeleinrichtung,
- 2: Abkoppeleinrichtung,
- 3.1 bis 3.n: Filter, Filterstufe,
- 4.1 bis 4.n: Verstärker, Verstärkerstufe,
- 5, 5.1 bis 5.n: Regler
- 50: Zustandsregler
- 6, 6.1 bis 6.n: Hüllkurvendetektor
- 7, 7.1 bis 7.n: Proportionalglied
- 8: Signalwandel- und Auswerteeinrichtung
- A: Ausgang, Ausgangssignal
- D: Daten
- L, N: Leitungen eines Verteilnetzes
- x: Regelgröße
- y: Stellgröße

## Patentansprüche

1. Netzankoppeleinrichtung mit
a) Mitteln (2) zur Auskopplung von HF-Signalen aus einem elektrischen Verteilnetz (L, N),
b) einer Kette von abwechselnd aufeinanderfolgenden Filterstufen (3.1 bis 3.n) und Verstärkersrufen (4.1 bis 4.n) zur HF-Empfangssignal-Aufbereitung, und
c) wenigstens einer Regeleinrichtung (5, 50) zur Regelung der Verstärkung wenigstens einer der Verstärkerstufen (4.1 bis 4.n),
dadurch gekennzeichnet, daß
d) als Regeleinrichtung eine Zustandsregler (50) eingesetzt ist, dem Ausgangssignale mehrerer oder aller Verstärker (4.1 bis 4.n) als Eingangswerte zugeführt sind.

2. Netzankoppeleinrichtung mit
a) Mitteln (2) zur Auskopplung von HF-Signalen aus einem elektrischen Verteilnetz (L, N),
b) einer Kette von abwechselnd aufeinanderfolgenden Filterstufen (3.1 bis 3.n) und Verstärkersrufen (4.1 bis 4.n) zur HF-Empfangssignal-Aufbereitung, und
c) wenigstens einer Regeleinrichtung (5, 50) zur Regelung der Verstärkung wenigstens einer der Verstärkerstufen (4.1 bis 4.n),
dadurch gekennzeichnet, daß
zur Regelung der Verstärkung mehrere unterlagerte Regelkreise mit Reglern (5.1 bis 5.n) eingesetzt sind, wobei
a.) den Reglern (5.1 bis 5.n) jeweils das Ausgangssignal eines der Verstärker (4.1 bis 4.n) als Regelgröße (x1 bis xn) sowie ein jeweils angepaßter Sollwert (S1 bis Sn) zugeführt sind, und
b) die jeweiligen Ausgangssignale der einzelnen Regler (5.1 bis 5.n) als Stellgröße (y1 bis yn) dem im unterlagerten Regelkreis jeweils ersten Verstärker (4.1 bis 4n) in der Kette zugeführt sind.

3. Netzankoppeleinrichtung nach Anspruch 1, dadurch gekennzeichnet, daß die vom Regler (50) gebildete Stellgröße (y) über unterschiedlich eingestellte Proportionalglieder (z.B. 7.n) auf Stellelemente (T1a,T1b) mehrerer oder aller Verstärkerstufen (4.1 bis 4.n) geführt ist.

4. Netzankoppeleinrichtung nach einem der vorstehenden Ansprüche, dadurch gekennzeichnet, daß als Mittel zur Auskopplung von HF-Signalen eine kapazitives Netzwerk (Cnetz, Rnetz) kombiniert mit einem HF-Übertrager (Tr1) angeordnet sind.

5. Netzankoppeleinrichtung nach einem der vorstehenden Ansprüche, dadurch gekennzeichnet, daß als Filterstufen (3.1 bis 3.n) passive Bandfilter eingesetzt sind.

6. Netzankoppeleinrichtung nach einem der vorstehenden Ansprüche, dadurch gekennzeichnet, daß die Ausgangssignale von Versärkerstufen (4.1 bis 4n) jeweils über Hüllkurvendetektoren zur Ermittlung des Spitzenwertes (6.1 bis 6.n) den Eingängen der jeweiligen Regler (50, 5.1 bis 5.n) zugeführt sind.

## Claims

1. Network coupling device having
a) means (2) for outputting RF signals from an electrical distribution network (L, N),
b) a chain of alternately successive filter stages (3.1 to 3.n)and amplifier stages (4.1 to 4.n) for RF received signal conditioning, and
c) at least one control device (5, 50) for controlling the gain of at least one of the amplifier stages (4.1 to 4.n)
characterized in that
d) a state controller (50) is used as the control device, to which output signals from a number of the amplifiers, or all of the amplifiers (4.1. to 4.n) are supplied as input values.

2. Network coupling device having
a) means (2) for outputting RF signals from an electrical distribution network (L,N),
b) a chain of alternately successive filter stages (3.1 to 3.n)and amplifier stages (4.1 to 4.n) for RF received signal conditioning, and
c) at least one control device (5,50) for controlling the gain of at least one of the amplifier stages (4.1 to 4.n)
characterized in that
a plurality of subordinate control loops having controllers (5.1 to 5.n) are used to control the gain,
a) controllers (5.1 to 5.n) each being supplied with the output signal from one of the amplifiers (4.1 to 4.n) as the control variable (x1 to xn) as well as a respectively matched nominal value (S1 to Sn), and
b) the respective output signals of the individual controllers (5.1 to 5.n) being supplied as manipulated variables (y1 to yn) to the respective first amplifier (4.1 to 4.n) in the chain in the subordinate control room.

3. Network coupling device according to Claim 1, characterized in that the manipulated variable (y) formed by the controller (50) is passed via differently set proportional elements (for example 7.n) to actuating elements (T1a, T1b) for a number of the amplifier stages, or all of the amplifier stages (4.1 to 4.n).

4. Network coupling device according to one of the preceding claims, characterized in that a capacitive network (C network, R network) combined with an RF transformer (Tr1) is arranged as the means for outputting RF signals.

5. Network coupling device according to one of the preceding claims, characterized in that passive bandpass filters are used as the filter stages (3.1 to 3.n) .

6. Network coupling device according to one of the preceding claims, characterized in that the output signals of the amplifier stages (4.1 to 4.n) are in each case supplied to the inputs of the respective controllers (50, 5.1 to 5.n) via envelope curve detectors for determining the peak value (6.1 to 6.n).

## Revendications

1. Dispositif de couplage au réseau de distribution électrique comportant
a) des moyens (2) pour le prélèvement de signaux HF dans un réseau de distribution électrique (L, N),
b) une chaîne d'étages filtres (3.1 à 3.n) et d'étages amplificateurs (4.1 à 4n) disposés les uns à la suite des autres en alternance pour le traitement du signal de réception HF et
c) au moins un dispositif de régulation (5, 50) pour la régulation de l'amplification de l'un au moins des étages amplificateurs (4.1 à 4.n),
caractérisé par le fait que
d) l'on utilise comme dispositif de régulation un régulateur d'état (50) auquel sont envoyés en tant que grandeurs d'entrée des signaux de sortie de plusieurs ou de tous les amplificateurs (4.1 à 4.n),

2. Dispositif de couplage au réseau de distribution électrique comportant
a) des moyens (2) pour le prélèvement de signaux HF dans un réseau de distribution électrique (L, N),
b) une chaîne d'étages filtres (3.1 à 3.n) et d'étages amplificateurs (4.1 à 4n) disposés les uns à la suite des autres en alternance pour le traitement du signal de réception HF et
c) au moins un dispositif de régulation (5, 50) pour la régulation de l'amplification de l'un au moins des étages amplificateurs (4.1 à 4.n),
caractérisé par le fait que
pour réguler l'amplification on utilise plusieurs circuits de régulation subordonnés avec des régulateurs (5.1 à 5.n),
a) le signal de sortie de l'un des amplificateurs (4.1 à 4.n), en tant que grandeur réglée (x1 à xn), ainsi qu'une valeur de consigne adaptée (S1 à Sn) étant envoyés aux régulateurs (5.1 à 5.n) et
b) les signaux de sortie des différents régulateurs (5.1 à 5.n) étant envoyés en tant que grandeurs réglantes (y1 à yn) chaque fois au premier amplificateur (4.1 à 4.n) de la chaîne dans le circuit de régulation subordonné.

3. Dispositif de couplage au réseau de distribution électrique selon la revendication 1, caractérisé par le fait que la grandeur réglante (y) formée par le régulateur (50) est amenée par l'intermédiaire d'éléments proportionnels (par exemple 7n) présentant différents réglages à des éléments de régulation (T1a, T1b) de plusieurs ou de tous les étages amplificateurs (4.1 à 4.n).

4. Dispositif de couplage au réseau de distribution électrique selon une des revendications précédentes, caractérisé par le fait que l'on utilise comme moyens pour le prélèvement de signaux HF un circuit capacitif (Cnetz (circuit C), Rnetz (circuit R)) combiné à un transmetteur HF (Tr1).

5. Dispositif de couplage au réseau de distribution électrique selon une des revendications précédentes, caractérisé par le fait que l'on utilise comme étages filtres (3.1 à 3.n) des filtres de bande passifs.

6. Dispositif de couplage au réseau de distribution électrique selon une des revendications précédentes, caractérisé par le fait que les signaux de sortie d'étages amplificateurs (4.1 à 4.n) sont envoyés par le biais de détecteurs d'enveloppe aux entrées des régulateurs concernés (50, 5.1 à 5.n) à des fins de détermination de la valeur de crête (6.1 à 6.n).
